# EUROPÄISCHE PATENTSCHRIFT

(11) **EP 2 646 271 B1**
(45) Veröffentlichungstag und Bekanntmachung des Hinweises auf die Patenterteilung: **31.05.2017**
(21) Anmeldenummer: 11833564.5
(22) Anmeldetag: 24.11.2011
(51) Int. Cl.: B60L 5/04, B60L 5/16

(54) **SYSTEM FÜR DAS AUTOMATISCHE AN- UND ABDRAHTEN EINES OBERLEITUNGSFAHRZEUGES WÄHREND DER FAHRT**
SYSTEM FOR AUTOMATICALLY CONNECTING AND DISCONNECTING A CATENARY VEHICLE TO AND FROM THE OVERHEAD LINE DURING TRAVEL
SYSTÈME DE CONNEXION ET DE DÉCONNEXION AUTOMATIQUE D'UN VÉHICULE À TROLLEY EN MARCHE

(30) Priorität: 30.11.2010 DE 102010053528
(43) Veröffentlichungstag der Anmeldung: 09.10.2013
(73) Patentinhaber: Dialogika Gesellschaft Für Angewandte Informatik mbH, 66125 Saarbrücken (DE)
(72) Erfinder: MESSERSCHMIDT, Jan, 66119 Saarbrücken (DE)
(86) Internationale Anmeldenummer: PCT/DE2011/002058
(87) Internationale Veröffentlichungsnummer: WO 2012/072067

(56) Entgegenhaltungen:
- DE-A1- 2 460 843
- DE-A1- 10 054 766
- FR-A1- 2 506 234
- JP-A- 53 006 065
- JP-A- 54 022 610

## Beschreibung

Bei der Erfindung handelt es sich um ein aus digitalen Kameras, aus auf die Stangenstromabnehmer wirkende Aktoren und aus einer elektronischen Steuerung bestehendes System, das es Oberleitungsfahrzeugen unter Benutzung eines zugehörigen Verfahrens, insbesondere mit stereo-optischer Mustererkennung und dynamischer Zielverfolgung, ermöglicht, ihre Stromabnehmer während der Fahrt bedarfsgerecht automatisch an die Fahrleitungen an- und abzudrahten.

Elektrisch betriebene Fahrzeuge haben viele Vorteile im Vergleich zu solchen, die primär ihre Energie aus Verbrennungsmotoren beziehen. Da die Speicherung oder die die gängiger Meinung nach saubere Erzeugung von Strom mittels Brennstoffzelle nach wie vor nicht hinreichend effizient möglich sind, stellt die Stromversorgung über Ober- oder sonstige Leitungen bzw. Stromschienen eine wichtige Alternative dar. Bei spurgebundenen Fahrzeugen wie Eisenbahnen oder Straßenbahnen sind die schon seit über hundert Jahren bekannten Verfahren ausreichend praxistauglich und weit verbreitet. Bei nicht spurgebundenen Fahrzeugen, insbesondere bei den Obussen, sind bei den bekannten Verfahren jedoch die Einschränkungen so groß, dass in vielen Städten sogar existierende Systeme rückgebaut und durch dieselbetriebene Busse ersetzt wurden. Die wichtigste Einschränkung bekannter Trolleybus-Verfahren besteht in der mangelnden Flexibilität, d.h. der fehlenden oder nur mit großem Aufwand zu erreichenden Möglichkeit, den Trolleybus kurzzeitig auch ohne Oberleitung zu betreiben.

Elektrobusse, die auch als Obusse, Oberleitungsbusse oder Trolleybusse bezeichnet werden, werden primär über zweipolige Leitungssysteme in Form von Oberleitungen mit Energie versorgt. Die Leitungen werden in einer definierten Höhe in der Regel mittig über der vorgesehenen Spur geführt. Dabei verlaufen die Leitungen bedingt durch die Art der Aufhängung nicht einmal wirklich parallel, d. h. der Abstand der Leitungen zueinander, typisch etwa 60 cm, kann durchaus im Bereich von zehn Zentimetern oder mehr schwanken. Auch die Höhe unterliegt einer größeren Toleranz, sie liegt nämlich zwischen 5 und 6 m. Eine noch größere Toleranz ist beim Versatz zur Spurmitte zu verzeichnen, der nämlich bis 4,5 m bei 6,2 m langen Stangen betragen kann. Alle diese Faktoren behindern ein automatisches Andrahten, das Vorraussetzung ist für eine Reihe von zusätzlichen Anwendungsszenarien, die die gewünschte und mit einem Obus prinzipiell mögliche Elektromobilität, insbesondere in den Innenstädten, voranbringen würden.

Die Stromabnehmer sind üblicherweise als U-förmige Schleifschuhe ausgebildet und um eine vertikale und eine horizontale Achse schwenkbar jeweils an der Spitze der beiden Stangenstromabnehmer angeordnet. Die Schleifschuhe werden über die Stangen von einer senkrecht nach oben gerichteten Kraftwirkung an die Oberleitungen angedrückt, so dass der elektrische Kontakt in der Phase der Andrahtung kontinuierlich erhalten bleibt.

Die bekannten Systeme sind dafür konzipiert, dass die Stromabnehmer über die gesamte Fahrstrecke hinweg angedrahtet bleiben bzw. nur im Stand ab- oder zumindest angedrahtet werden. Da die Leitungsnetze für eine während der gesamten Fahrt durchgängige Energieversorgung nicht nur aufwändig zu erstellen und zu warten sind, insbesondere bei Luftweichen, doppelter oder vielfacher Leitungsführung auf Strecken mit Zweirichtungs- und Mehrspurbetrieb, sondern auch weitere Nachteile mit sich bringen wie ästhetische Einschränkungen, insbesondere in historischen Stadtkernen oder auf Repräsentationsflächen, ist es wünschenswert, die Fahrzeuge auf mehr oder weniger kurzen Teilstrecken drahtlos zu betreiben.

Dies bedingt einerseits eine zusätzliche autonome Energiebereitstellung im Fahrzeug, z. B. mittels Batterien, Kondensatoren, Verbrennungsmotor mit Generator, Brennstoffzelle oder Schwungrad, andererseits ein Stromabnehmersystem, das automatisiert, schnell und sicher von den Leitungen ab- bzw. insbesondere an sie andrahten kann. Es sind verschiedene Entwicklungen bekannt, die sich auf die Frage der Energiebereitstellung im Fahrzeug beziehen, so z. B. Zweisystemfahrzeuge, die einen Diesel-Generator an Bord mitführen, oder der in DE 30 15 754 C beschriebene Schwungradspeicher, über den für den Autonombetrieb Strom erzeugt werden kann.

Auch zum Problem des automatisierten Andrahtens, also der gesteuerten Zuführung der Stromabnehmer zu den Leitungen, wurden Lösungsvorschläge veröffentlicht: In DE 24 60 843 wird vorgeschlagen, an den Abnehmerschuhen seitlich jeweils eine senkrechte, parallel zur Fahrtrichtung angeordnete Einspurhilfe, "Fahne", zu installieren, die das Einspuren erleichtern soll und bei Erreichen des Kontaktes nach unten abgeklappt wird. Die Nachteile dieses Systems bestehen darin, dass zum einen das automatisierte Anlegen mit dieser Vorrichtung nur im Stand erfolgen kann, weil die Fahne in aufgeklapptem Zustand in den Bereich der Fahrdrahtaufhängung hineinragt und zum anderen die Heranführung an den Fahrdraht immer noch eine manuelle Interaktion erfordert.

Der Vorschlag in FR 2 506 234 läuft auf den Versuch hinaus, den Vorgang zu automatisieren und dabei den Mess- und Regelaufwand dadurch zu reduzieren, dass beide Stromabnehmerschuhe auf einem gemeinsamen Träger montiert werden. Die Umsetzung scheitert allerdings schon daran, dass, wie eingangs ausgeführt, die Fahrdrähte prinzipbedingt niemals in einem exakt vorhersehbaren Abstand zueinander vorgefunden werden.

Auch der unter DE 100 54 766 eingereichte Vorschlag löst zwar das Problem der unzuverlässigen Parallelführung der beiden Fahrdrähte, reduziert ansonsten aber lediglich den Regelungsaufwand für das Heranführen der Schleifschuhe an die Oberleitung, ohne eine Lösung für die Situation zu geben, dass sich die Oberleitung nicht genau mittig bzw. in einem engen Korridor über dem Fahrzeug befindet, noch für die Situation, dass die Oberleitung während der Fahrt beginnt oder endet.

Die thematisch verwandte Erfindung aus DE 100 12 039 C hat darüber hinaus den zusätzlichen Nachteil, dass es eine völlig neue und dabei aufwändigere Technologie und Konfiguration der Fahrdrahtführung und -aufhängung voraussetzt.Aus der JP54022610 ist eine Vorrichtung nach dem Oberbegriff des Anspruchs 1 bzw. des Anspruchs 5 bekannt. Diesen genannten Antriebssystemen ist zudem allen gemein, dass vorausgesetzt wird, dass die Lage der Abnehmerstange sowohl zum Fahrzeug als auch zur Fahrleitung erfasst und in Bewegungssteuerung umgesetzt werden kann, ohne dass hierfür konkrete Vorschläge erbracht werden.

Konsequenterweise hat es auch keines dieser Systeme zum Praxiseinsatz gebracht: Entweder wird die gesamte Linienlänge von einer durchgehenden Oberleitung versorgt, oder die Fahrzeuge fahren auf bestimmten Abschnitten rein elektrisch, z. B. in Tunnels, und ansonsten mit Diesel, die Stromabnehmerschuhe werden entweder manuell oder bestenfalls halbautomatisch in stationären Vorrichtungen eingespurt, die "Trichter" genannt werden. Konzeptionen, die von vornherein nur wenige Meter lange durchgehende Streckenabschnitte elektrifizieren, Kreuzungen, Unterführungen, Linksabbieger, Bergabfahrten etc. konsequent aussparen und von daher auf ein sicheres und vor allem schnelles automatisches Wiederanlegen der Stromabnehmer auch während der Fahrt angewiesen sind, sind weder in der Literatur noch in der Praxis zu finden.

**Aufgabe der Erfindung ist es daher**, ein Stromabnehmersystem zusammen mit den dazu benutzten Verfahren zu beschreiben, das insbesondere genau diese Aufgabenstellung, d.h. das vollautomatische Ab- und Andrahten der Stangenstromabnehmer eines Fahrzeuges während der Fahrt, löst.

Die Aufgabe der Erfindung wird durch die Vorrichtung und das Verfahren der unabhängigen Ansprüche gelöst.

Der Kern der Erfindung besteht darin, dass mittels Bilderfassung, Bildverarbeitung und Bildauswertung Stangenstromabnehmer automatisch an eine Oberleitung an bzw. von der Oberleitung abdrahten können.

Die Erfindung beansprucht eine Vorrichtung zum automatischen An- und Abdrahten von mindestens einem Stangenstromabnehmer eines für den Betrieb an mindestens einer Oberleitung ausgelegten Fahrzeugs, mit mindestens einem Aktor, der den Stangenstromabnehmer bewegt, und mit mindestens einer Bilderfassungs- und Bildauswerteeinheit, die den Aktor derart steuert, dass der Stangenstromabnehmer an die Oberleitung an- oder abdrahtet. Die Erfindung bietet den Vorteil, dass automatisch Stromabnehmer eines Fahrzeugs an eine Oberleitung zuverlässig und sicher an- und abdrahten können.

Die Erfindung beansprucht auch ein Verfahren zum automatischen An- und Abdrahten mindestens eines Stangenstromabnehmers eines für den Betrieb an mindestens einer Oberleitung ausgelegten Fahrzeugs, mit einer Bilderfassung des Stangenstromabnehmers und der Oberleitung, mit einer Bildauswertung zur Bestimmung der Position des Stangenstromabnehmers und der Oberleitung und mit einem Steuern eines mit dem Stangenstromabnehmer in Wirkverbindung stehenden Aktors aufgrund der Bildauswertung derart, dass der Stangenstromabnehmer an die Oberleitung an- oder abdrahtet.

Bevorzugt sind die Fahrzeuge mit zwei Stangenstromabnehmern ausgerüstet, die an zwei Oberleitungen an- bzw. abdrahten. Jeder der beiden Stangenstromabnehmer steht mit mindestens je einem Aktor in Wirkverbindung. Der Begriff "Oberleitung" ist mit dem Begriff "Fahrdraht" identisch.

Die Aufgabe wird auch durch ein System bestehend aus stereo-optischen Bewegtbild-Kameras, Aktoren für die Bewegung der Stangenstromabnehmer bzw. der Schleifschuhe und einer intelligenten Steuerungselektronik gelöst, die mittels optischer Mustererkennung aufgrund der von den Videokameras gewonnenen Daten die Position der Fahrdrähte im Verhältnis zum Fahrzeug genauso wie die Positionen der Schleifschuhe bzw. Stromabnehmerköpfe bestimmt und das auf der Basis ihrer Berechnungen und der Kommunikation mit anderen Systemen Befehle für die motorische bzw. hydraulische oder pneumatische Positionierung der Stangenstromabnehmer für die erforderlichen Ab- oder Andrahtbewegungen erzeugt.

Die genannte Steuerungselektronik realisiert eine obere Befehlsebene, die darüber entscheidet, ob an- oder entdrahtet werden soll und eine untere Ebene, die die Bewegungen von Stangenstromabnehmer bzw. Schleifschuh kontrolliert. Beide Ebenen bedienen sich der aus den Kameras gewonnen Informationen, d.h. Bewegtbilder, und ggf. weiterer Sensoren, mit deren Hilfe die Relativpositionen von Schleifschuhen und Oberleitungen, aber auch das visuelle Umfeld, insbesondere Hindernisse zwischen Schleifschuh und Oberleitung, ermittelt werden. Die obere Ebene kann sich zusätzlich noch eines Zugangs zu einem Globalen Navigationssatellitensystem bedienen, um die Geo-Position des Fahrzeuges zu bestimmen, die mit einer Karte abgeglichen wird, auf der die Bereiche mit und ohne Oberleitung bzw. von Oberleitungsunterbrechungen verzeichnet sind. Außerdem kann die obere Ebene sich noch der Car-to-Car-Kommunikation auf der Basis von digitalem Funk mit gleichartig ausgestatteten Fahrzeugen bedienen, um im Falle von Ressourcenkonflikten (um dieselbe Oberleitung) auszuhandeln, welches der beteiligten Fahrzeuge angedrahtet bleibt und welches bzw. welche (kurz) abdrahten soll bzw. sollen.

Die obere Ebene kann zudem noch aufgrund von statistischen (aus der bisherigen Benutzung gewonnenen) oder sonstigen Angaben, insbesondere einem in der Karte hinterlegten Steigungs- und Gefälleprofil, unter dem Gesichtspunkt der Ressourcenschonung, d.h. zur Energie- und Verschleißoptimierung, An- und Entdrahtvorgänge an die untere Ebene befehlen.

### Die Erfindung wird anhand eines Ausführungsbeispiels näher beschrieben.

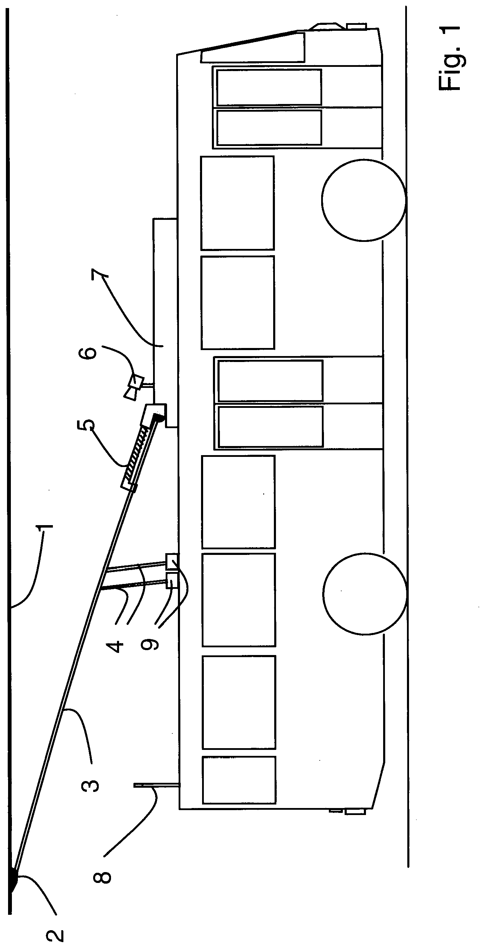

Abbildung 1 zeigt dazu die betroffenen mechanischen Komponenten im Zusammenhang mit dem Fahrzeug am Beispiel eines Obusses in der Seitenansicht.

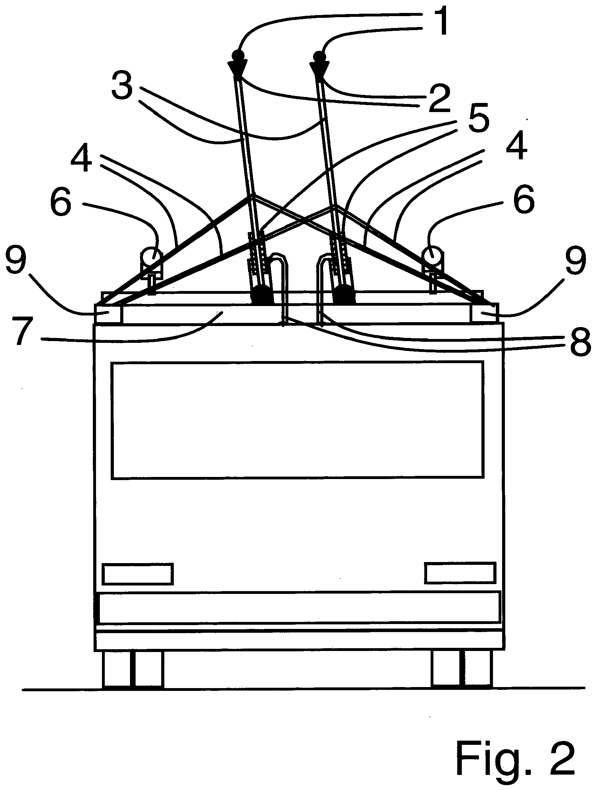

Abbildung 2 zeigt dieselbe Situation in der Rückansicht.

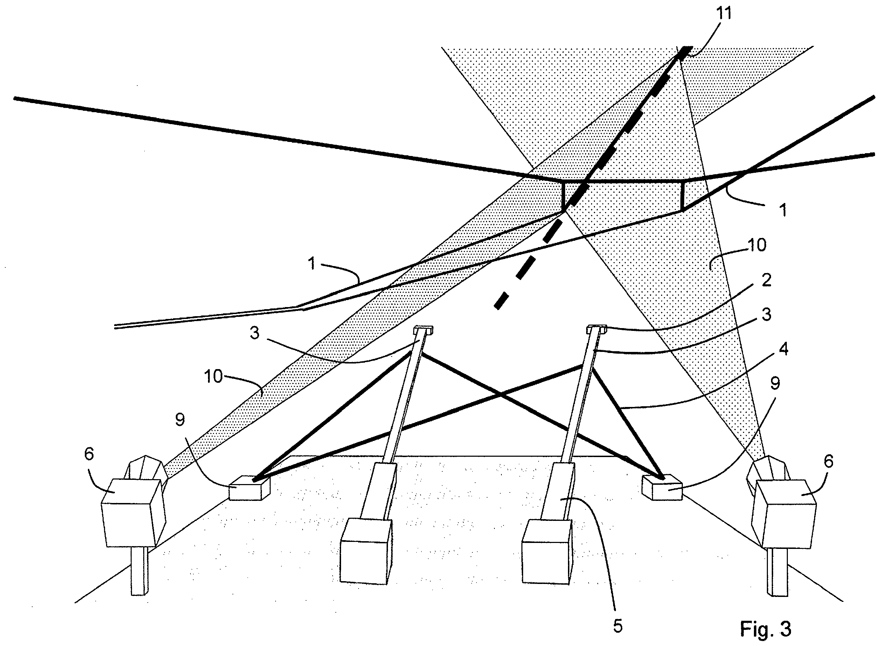

Abbildung 3 illustriert das Verfahren zur Bestimmung der Position der Oberleitung.

Die Abbildungen zeigen die Verwendung der Erfindung im Kontext eines Oberleitungsbusses, bei dem die aktive Bewegung der Stangenstromabnehmer (3) über Fangseilmotore (9) und die gespannten Fangseile (4) in Verbindung mit der durch die Anpressfedern (5) erzeugten Kraft erfolgt. Die stereooptischen Videokameras (6) sind auf dem Dach des Busses angebracht und übermitteln ihre Bilddaten in die auch im Dachaufbau (7) untergebrachte Steuerungselektronik, die ihrerseits die Steuerbefehle für die Aktoren, d.h. in diesem Beispiel die Fangseilmotoren, übermittelt.

Die Steuerungselektronik bedient sich dabei der im Folgenden beschriebenen Verfahren der Erfindung, um die Stangenstromabnehmer zusammen mit den Schleifschuhen (2) bedarfsgerecht so dicht unter die ggf. vorhandene Oberleitung (1) zu positionieren, dass ein elektrischer Kontakt hergestellt wird. Umgekehrt werden in den Bereichen, in denen es gemäß den von der Steuerungselektronik berechneten Betriebszuständen unvorteilhaft oder schädlich ist, angedrahtet zu fahren bzw. wo keine Oberleitung in Reichweite der Stangenstromabnehmer mehr existiert, die entsprechenden Steuerungsbefehle für die Aktoren für das Abdrahten und ggf. Verankern in der Verriegelungseinrichtung (8) erzeugt.

Dabei werden in den Videobildern der genannten Kameras mit Methoden der Mustererkennung die Positionen der beiden Fahrdrähte als zwei im Wesentlichen gerade Linien im 2-dimensionalen Bild identifiziert, korrespondierend jeweils zum "linken" und zum "rechten" Fahrdraht. Beide Linien legen durch inverse Projektion im 3-dimensionalen Raum jeweils eine Fläche (10) relativ zum Fahrzeug fest. Indem im 3-dimensionalen Raum die linken und die rechten Flächen der beiden Bilder der beiden Kameras rechnerisch geschnitten werden, und zwar jeweils die linken miteinander und die rechten miteinander, erhält man eine linke und eine rechte Linie (11) im 3-dimensionalen Raum, immer noch relativ zur Position des Fahrzeuges. An diese beiden Linien müssen für das Andrahten die beiden Stromabnehmer von unten heranpositioniert werden. Dazu wird analog auch die Position der Schleifschuhe an den Stangenstromabnehmern stereooptisch im Raum bestimmt, entsprechende Kurven im Raum rechnerisch festgelegt, über die die Schleifschuhe an die Fahrdrähte herangefahren werden, und die Stangenmechanik so geregelt, dass die Schleifschuhe sich auf den errechneten Kurven an die Fahrdrähte annähern. Da all dies im Fahrbetrieb stattfindet, d.h. sich insbesondere die Lage der Fahrdrähte relativ zum Fahrzeug verändert, müssen die Ist- und die Soll-Positionen und die daraus abgeleiteten Steuerbefehle permanent neu berechnet werden.

Das Verfahren für das Abdrahten ist analog, nur dass hierfür die Position der Fahrdrähte je nach Umsetzung keine Rolle mehr spielt.

Zudem führt die Steuerung im angedrahteten wie im abgedrahteten Zustand permanent eine Überwachung der Fahrdrähte durch mit dem Ziel der Beantwortung der folgenden Fragen:
- Laufen die Fahrdrähte aus dem Korridor relativ zum Fahrzeug, der für die Schleifschuhe erreichbar ist, d.h. das Fahrzeug verlässt den Spurbereich?
- Bzw. kommen die Fahrdrähte in diesen Korridor zurück?
- Enden die Fahrdrähte?
- Bzw. beginnen sie wieder?
- Befindet sich unter den Fahrdrähten ein Hindernis, insbesondere z.B. die Schleifschuhe eines anderen Fahrzeuges, wobei gleichzeitig Bewegungsorientierung und -geschwindigkeit des Hindernisses relativ zum Fahrzeug ermittelt werden?
- Befindet sich das Fahrzeug aktuell im an- oder im abgedrahteten Zustand?

Die mit der Erfindung erzielten Vorteile bestehen darin, dass eine signifikante Vereinfachung der Leitungsführung erreicht werden kann, aber trotzdem die Zeit, in der das Fahrzeug Energie aus der Oberleitung bezieht, maximiert wird.

Zudem können im mechanischen Bereich erprobte Standardkomponenten eingesetzt werden.

Als weiterer Vorteil wird gesehen, dass nunmehr erstmals ein An- und Abdrahten in Abstand von wenigen Sekunden vorgesehen werden kann, was auch häufige Wechsel von Fahrten mit und ohne Oberleitungskontakt und flexible Reaktion auch auf unvorhersehbare Fahrsituationen ermöglicht, z.B. Umfahrung eines kurzfristig aufgetretenen Hindernisses wie z.B. nach einem Unfall.

Durch den vollautomatischen Betrieb kann all dies ohne Belastung oder manuellen Eingriff des Fahrers erfolgen.

Die oben genannte optische Mustererkennung bedient sich insbesondere der Methode der Verfolgung eines sich träge bewegenden Zieles, bei dem man aus seiner bisherigen Bewegung auf die zukünftige schließen kann, so dass auch bei schwierigen Sichtverhältnissen, wie z.B. Starkregen oder Schnee, eine sichere Fahrdrahterkennung gewährleistet werden kann. Für die sichere Funktion bei Dunkelheit reichen kleine Lampen, z.B. Infrarot-LEDs, aus, wie sie häufig in Überwachungskameras integriert sind.

Die genannte Methode aus der Zielverfolgung macht sich im Einzelnen folgendes Prinzip zueigen:
Die aufgrund vorheriger Erkennungen quasi erwarteten dynamischen Positionen der Fahrdrähte unter Extrapolation ihrer Bewegung in der Vergangenheit innerhalb des 2-dimensionalen Videobildes werden bei der Berechnung der Folgesituation mit einer (deutlich) höheren Wahrscheinlichkeit belegt, dass dort das gesuchte Muster (wieder) angetroffen wird.

Im angedrahteten Zustand kann zudem die errechnete und ggf. auch durch Sensoren bestimmte Position des Stangenstromabnehmers bzw. des Schleifschuhs zur Bestimmung der Position der Fahrdrähte herangezogen werden.

Zur Kontrolle kann dem Busfahrer auch das von den Kameras aufgenommene Bild mit der Einblendung der erkannten Fahrleitungen und Stangenstromabnehmer im Armaturenbrett dargestellt werden. Wird keine Fahrleitung erkannt, erfolgt auch kein Andrahten bzw. es wird automatisch entdrahtet.

Die Einfahrt in Bereiche, in denen angedrahtet gefahren werden soll, d.h. solche, in denen prinzipiell Oberleitungen verlegt sind, wird über ein Globales Navigationssatellitensystem, z.B. GPS, d.h. das amerikanische Global Positioning System, oder sein künftiges EU-Pendant Galileo, und eine hinterlegte Karte erkannt. Das Verlassen dieser Bereiche, z.B. Netzende, Unterführungen und Tunnels mit unzureichendem Lichtraum für Fahrdrähte oder Baustellen mit Abweichung von der normalen Spur, wird analog erkannt und führt zum planmäßigen Abdrahten. Gleiches gilt für Abzweigungen, die damit keine (Luft-) Weichen im eigentlichen Sinne mehr erfordern, die kostspielig und verschleißanfällig sind: Die abzweigende Leitung fängt lediglich etwas abgesetzt von der Abzweigstelle quasi neu an, abzweigende Fahrzeuge drahten in dem Bereich kurz ab und dann an die neue Leitung wieder an. Gleiches gilt bei Kreuzungen mit anderen Oberleitungen und auch mit solchen von Straßen- oder Eisenbahnen, bei denen das bzw. eines der beiden sich kreuzenden Fahrleitungspaare einfach kurz unterbrochen wird. Auch Bereiche, in denen Oberleitungen aus optischen oder aus anderen Gründen stören würden, können mit diesem Ansatz ausgespart werden.

Im abgedrahteten Betrieb bezieht das Fahrzeug seine Energie aus einem Speicher (Schwungrad, Akkumulator oder Caps) und/oder aus einem zusätzlichen Verbrennungsmotor (APU, auxiliary power unit, Hybrid-Betrieb oder Brennstoffzelle).

Der ggf. vorhandene Speicher wird mit der Rekuperationsenergie bzw. aus dem Fahrdraht, oder ggf. auch aus der APU, nachgeladen mittels intelligenter Heuristik in der Steuerung über die in der Folge zu erwartende Speicherbenutzung, wobei die vor dem Fahrzeug liegende Strecke und ihr Energiebedarfsprofil bekannt sind. Es kann vorgesehen werden, die hinterlegte Karte über digitalen Funk (GSM/ UMTS oder Bündelfunk) bei Bedarf auch während der Fahrt zu aktualisieren.

Über die optische Kontrolle erfolgt ein permanenter Vergleich zwischen Karte (Soll) und tatsächlicher Situation (Ist). Bei Abweichung, z.B. "Oberleitung fehlt unerwartet", erfolgt ggf. eine Rückmeldung an den Fahrer und per Digitalfunk an die Betriebszentrale.

Die optisch aufgenommenen Daten werden kontinuierlich in einen Ringspeicher (Silikon-Disk) aufgenommen (Video als Log), was bei der nachträglichen Analyse von Problemen herangezogen werden kann.

Planmäßiges Abdrahten in (längeren) Bereichen, in denen wenig Antriebsenergie benötigt bzw. wenig Rekuperationsenergie rückgespeist wird (z.B. längere Strecke mit leichtem Gefälle), kann zur Verschleißreduzierung am Stromabnehmer und an den Fahrleitungen genutzt werden.

Entsprechend können solche Wegabschnitte ggf. gänzlich ohne Oberleitung ausgeführt werden.

In Bereichen mit Gegenverkehr kann bei entsprechenden örtlichen Verhältnissen mit einer gemeinsamen Oberleitung für beide Richtungen gefahren werden. Bei der Begegnung von zwei Bussen verständigen sich die beiden Fahrzeugsteuerungen per Digitalfunk automatisch darüber, welcher der beiden Busse für die Begegnung kurz abdrahtet (Car-to-Car-Kommunikation). Dabei können Vorrangregeln in der o.g, Karte hinterlegt werden, so dass derjenige Bus abdrahtet, für den eine geringere Energieaufnahme vom Netz zu erwarten ist. Die Tatsache, dass eine Begegnung stattfindet, kann über Digitalfunk (Positionsrückmeldung der einzelnen Busse) oder über Transponder detektiert werden. Ein Versagen der automatischen Kommunikation (z.B. Ausfall Digitalfunk) kann über die optische Kontrolle erkannt werden und führt zum Notfall-Abdrahten beider Busse.

Ein Abdrahten wird auch beim Überholen, welches automatisch erkannt oder durch den Fahrer explizit angekündigt wird, eingeleitet bzw. auch allgemein bei parallelen Spuren in derselben Richtung mit gemeinsam benutzter Oberleitung.

Automatisches Abdrahten erfolgt auch dann, wenn der Zielbereich der Stangenstromabnehmer den Bereich der Oberleitungen verlässt, z.B. beim Umfahren einer Baustelle oder eines Verkehrsunfalls. Automatisches Wiederandrahten erfolgt, sobald der Bus sich wieder ausreichend weit in den Bereich der Oberleitungen geschert ist.

Im Ergebnis entsteht ein System, das sich durch hohe Betriebssicherheit bei günstigen Kosten auszeichnet.

## Patentansprüche

1. Vorrichtung zum automatischen An- und Abdrahten von mindestens einem Stangenstromabnehmer (3) eines für den Betrieb an mindestens einer Oberleitung (1) ausgelegten Fahrzeugs, mit:
- mindestens einem Aktor (9), der ausgebildet ist, den Stangenstromabnehmer (3) zu bewegen,
- mindestens einer Bilderfassungs- und Bildauswerteeinheit (6), die ausgebildet ist, den Aktor (9) derart zu steuern, dass der Stangenstromabnehmer (3) an die Oberleitung (1) an- oder abdrahtet und
- stereo-optischen Kameras der Bilderfassungs- und Bildauswerteeinheit (6), die ausgebildet sind, ein stereo-optisches Bild des Stangenstromabnehmers (3) und der Oberleitung zu erfassen,
**dadurch gekennzeichnet,**
**dass** die Bilderfassungs- und Bildauswerteeinheit (6) ausgebildet ist, mittels Mustererkennung den mindestens einen Aktor (9) zu steuern.

2. Vorrichtung nach Anspruch 1,
**gekennzeichnet durch**:
- eine elektronische Schaltung mit Kommunikations- und Speicherelementen, die ausgebildet ist, aus einem Signal der stereooptischen Kameras (6) und weiteren Eingangsgrößen durch Steuerungsbefehle auf den Aktor (9) einen Schleifschuh (2) des Stangenstromabnehmers (3) derart zu positionieren, dass ein elektrischer Kontakt des Schleifschuhs (2) mit der Oberleitung (1) herstellbar ist.

3. Vorrichtung nach einem der vorhergehenden Ansprüche,
**gekennzeichnet durch**:
- zwei Stangenstromabnehmer (3) mit jeweils einem Schleifschuh (2),
- zwei Oberleitungen (1) und
- mindestens zwei Aktoren (9), die jeweils einen Stangenstromabnehmer (3) bewegen.

4. Verfahren zum automatischen An- und Abdrahten mindestens eines Stangenstromabnehmers (3) eines für den Betrieb an mindestens einer Oberleitung (1) ausgelegten Fahrzeugs,
durch:
- eine Bilderfassung des Stangenstromabnehmers (3) und der Oberleitung (1),
- eine Bildauswertung zur Bestimmung der Position des Stangenstromabnehmers (3) und der Oberleitung (1) und
- ein Steuern eines mit dem Stangenstromabnehmer (3) in Wirkverbindung stehenden Aktors (9) aufgrund der Bildauswertung derart, dass der Stangenstromabnehmer (3) an die Oberleitung (1) an- oder abdrahtet.
**dadurch gekennzeichnet,**
**dass** die Bildauswertung mittels Mustererkennung erfolgt.

5. Verfahren nach Anspruch 4,
**dadurch gekennzeichnet,**
**dass** die Bilderfassung und Bildauswertung stereo-optisch erfolgt.

6. Verfahren nach Anspruch 5,
**dadurch gekennzeichnet,**
**dass** die Steuerung aus einer errechneten Position der Oberleitung (1) und eines Schleifschuhs (2) des Stangenstromabnehmers (3) Befehle für den Aktor (9) ermittelt, wobei über von Kameras (6) aufgenommenen zweidimensionalen Bildern die Oberleitung (1) jeweils als weitgehend gerade Linie identifiziert wird, woraus jeweils zwei fast ebene Flächen in einem dreidimensionalen Raum relativ zum Fahrzeug errechnet werden, deren Projektion die weitgehend geraden Linien in dem zweidimensionalen Bild ergeben und in denen die Oberleitung (1) deshalb verlaufen muss, wonach die zwei Flächen geschnitten werden und damit eine relativ zum Fahrzeug weitgehend gerade Linie im Raum als Schnittmenge erhalten wird, und analog die Position eines zugehörigen Schleifschuhs (2) des Stangenstromabnehmers (3) im Raum wiederum stereo-optisch ermittelt wird als angenäherter Schnittpunkt der Linien im Raum, die durch die Projektion eines passend gewählten Punktes des Schleifschuhs (2) in den beiden zweidimensionalen Bildern bestimmt werden.

7. Verfahren nach Anspruch 6,
**dadurch gekennzeichnet,**
**dass** der Befehl zum An- und Abdrahten, d.h. Anlegen des Stangenstromabnehmers (3) an die Oberleitung (1) und zum Zurückziehen und/oder Verankern in einer Stangen-Verriegelungseinrichtung (8), durch eine übergeordnete Ebene in der Steuerung erteilt wird, bei der sich diese auf eine hinterlegte digitale Karte stützt, in der Bereiche, in denen das Fahrzeug grundsätzlich angedrahtet betrieben werden soll, auf einem Wegeplan markiert sind, und bei Verlassen der Bereiche durch das Fahrzeug der Befehl zum automatischen Abdrahten gegeben wird, und umgekehrt bei Erreichen eines Bereichs mit der Oberleitung (1) durch das Fahrzeug ein automatisches Andrahten angefordert werden kann, wozu jeweils eine Position des Fahrzeugs auf der digitalen Karte über ein Globales Navigationssatellitensystem ermittelt wird.

8. Verfahren nach Anspruch 6 oder 7,
**dadurch gekennzeichnet,**
**dass** anstelle von herkömmlichen Weichen für abbiegende Oberleitungen (1) die Oberleitung (1) hinter einer Abbiegestelle neu beginnt und dass die Steuerung dafür sorgt, dass ein abbiegendes Fahrzeug im Weichenbereich kurz ab- und dann an die neu beginnende Oberleitung (1) wieder andrahtet, was in analoger Form auch für Situationen gilt, bei denen das Fahrzeug eine Kreuzung passiert und die ihm zugeordnete Oberleitung (1) unterbrochen ist.

9. Verfahren nach einem der Ansprüche 6 bis 8,
**dadurch gekennzeichnet,**
**dass** kurzzeitiges Abdrahten auch dadurch von der Steuerung veranlasst wird, dass das Fahrzeug einem weiteren gleichartig ausgestatteten Fahrzeug begegnet oder an einem solchen vorbeifährt, das dieselbe Oberleitung (1) benutzt, wozu die beiden Fahrzeuge über eine digitale Funkverbindung (8) miteinander kommunizieren und dabei kooperativ festlegen, welches von beiden Fahrzeugen abdrahtet.

10. Verfahren nach einem der Ansprüche 6 bis 9, **dadurch gekennzeichnet, dass** die Steuerung zudem generell dann eine Abdrahtung einleitet, wenn die optische Mustererkennung eine unvorhergesehene Unterbrechung oder ein Hindernis, insbesondere den Stangenstromabnehmer (3) eines anderen Fahrzeuges bei gestörter digitaler Funkverbindung, signalisiert, wenn über mechanische Sensoren ein Hindernis erkannt wird wie z.B. einen optisch nicht erkannten Stromabnehmer eines anderen Fahrzeuges oder wenn ein Fahrzeugführer ein entsprechendes Kommando abgibt.

11. Verfahren für nach einem der Ansprüche 6 bis 10,
**dadurch gekennzeichnet,**
**dass** die Steuerung aus der bisherigen Position der Oberleitung (1) als fast gerade Linie im Raum und einem Bewegungsvektor des Fahrzeugs, der sich aus seiner bisherigen bzw. aktuellen Differenzgeschwindigkeit und -orientierung im Straßenraum und damit relativ zu der Oberleitung (1) ergibt, eine entsprechende neue mögliche Position für die Oberleitung (1) als Linie in den zweidimensionalen Bildern der Kameras (6) mit einer erhöhten Wahrscheinlichkeit belegt und dieses Ergebnis bei der optischen Mustererkennung verwendet.

12. Verfahren nach einem der Ansprüche 6 bis 11,
**dadurch gekennzeichnet,**
**dass** die Steuerung über die hinterlegte digitale Karte, in der auch die zu befahrende Strecke für das Fahrzeug eingetragen ist, in Kombination mit der Positionsermittlung und statistischen Methoden in Form von kontinuierlich hinzugewonnenen Erfahrungswerten zum Zwecke der Energieoptimierung berechnet, in welchen Bereichen Sekundärenergie aus einem Energiespeicher benötigt werden wird, wozu auch ein Höhenprofil der Landschaft für die Bestimmung von Steigungs- und Gefällestrecken herangezogen werden kann, um bei letzteren auch zum Zwecke der Verschleißminimierung abzudrahten.

13. Verfahren nach einem der Ansprüche 6 bis 12, **dadurch gekennzeichnet, dass** die Steuerung unter Einbeziehung eines erwarteten Verbrauchsprofils einen Energiefluss im Fahrzeug so bestimmt, dass auch im angedrahteten Zustand ein Teil der Betriebsenergie aus dem Energiespeicher bezogen oder rekuperierte Energie aus Fahrmotoren oder sogar aus dem Energiespeicher in ein Leitungsnetz rückgespeist wird bzw. dass umgekehrt ein gleichzeitiges Aufladen des Energiespeichers über die Oberleitung (1) erfolgt.

14. Vorrichtung nach Anspruch 1 zur Durchführung eines Verfahrens nach einem der Ansprüche 6 bis 13.

## Claims

1. Device for automatically connecting and disconnecting at least one pole current collector (3) of a vehicle which is designed for operation with at least one overhead line (1), with:
- at least one actuator (9) which is designed to move the pole current collector (3), and
- at least one image capturing and image evaluation unit (6) which is designed to control the actuator (9) in such a way that the pole current collector (3) is connected to or disconnected from the overhead line (1),
- stereoscopic cameras of the image capturing and image evaluation unit (6) which are designed to capture a stereoscopic image of the pole current collector (3) and the overhead line (1),
**wherein characterized in that**
the image capturing and image evaluation unit (6) is designed to control at least one actuator (9) by way of pattern recognition.

2. Device according to Claim 1,
**characterized by**
- an electronic circuit with communication and storage elements which is designed to position a contact shoe (2) of the pole current collector (3) on the basis of a signal of the stereoscopic cameras (6) and other input variables by way of control commands to the actuator (9) in such a way that electric contact of the contact shoe (2) can be made with the overhead line (1).

3. Device according to one of the foregoing claims,
**characterized by**
- two pole current collectors (3) each with one contact shoe (2),
- two overhead lines (1) and
- at least two actuators (9) that each move a pole current collector (3).

4. Method for automatically connecting and disconnecting at least one pole current collector (3) of a vehicle which is designed for operation with at least one overhead line (1), by way of:
- image capturing of the pole current collector (3) and the overhead line (1),
- image evaluation for determining the position of the pole current collector (3) and the overhead line (1) and
- control of an actuator (9) forming a mechanical link to the pole current collector (3) on the basis of image evaluation in such a manner that the pole current collector (3) connects to or disconnects from the overhead line (1),
**wherein characterized in that**
image evaluation is done by way of pattern recognition.

5. Method according to Claim 4,
**wherein characterized in that**
image capturing and image evaluation take place stereoscopically.

6. Method according to Claim 5,
**wherein characterized in that**
the control system determines commands for the actuator (9) on the basis of a computed position of the overhead line (1) and a contact shoe (2) of the pole current collector (3), whereby the overhead line (1) is identified as a largely straight line via the two-dimensional images captured by the cameras (6), on the basis of which two almost level planes each are computed in three-dimensional space relative to the vehicle whose projection results in the largely straight lines in the two-dimensional image and in which the overhead line (1) consequently must run, according to which the two planes are intersected and thus a largely straight line relative to the vehicle is obtained in space as the intersection set, and in an analogous manner the position of an associated contact shoe (2) of the pole current collector (3) is also determined stereoscopically in space as the approximate intersection of the lines in space that are determined by projecting an appropriately selected point of the contact shoe (2) in both of the two-dimensional images.

7. Method according to Claim 6,
**wherein characterized in that**
the command for connecting and disconnection, i.e. for applying the pole current collector (3) to the overhead line (1) and for retracting and/or anchoring it in a pole locking device (8), is issued by a higher level in the control system, said control system being based on a digital map on which areas in which the vehicle is to be operated in a connected state are marked on a route map, and when the vehicle leaves these areas the command is issued for automatically disconnecting and, vice versa, when the vehicle reaches an area with the overhead line (1) automatic connection can be ordered, whereby in each case a position of the vehicle on the digital map is determined via a global navigation satellite system.

8. Method according to Claim 6 or 7,
**wherein characterized in that**
instead of conventional switches for branching overhead lines (1) the overhead line (1) resumes after the turn-off and that the control system ensures that a vehicle turning off briefly disconnects in the switch area and then reconnects to the resuming overhead line (1), which analogously applies to situations in which the vehicle passes through an intersection and the overhead line (1) assigned to it is interrupted.

9. Method according to one of the Claims 6 to 8,
**wherein characterized in that**
brief disconnection is also initiated by the control system in such a manner that, when the vehicle encounters another vehicle equipped in the same manner or passes one using the same overhead line (1), the two vehicles communicate with one another via a digital radio link (7) and cooperatively determine which of the vehicle disconnects.

10. Method according to one of the Claims 6 to 9,
**wherein characterized in that**
the control system also generally initiates disconnection when the optical pattern recognition signals an unforeseen interruption or an obstacle, in particular the pole current collector (3) of another vehicle where digital radio communication is impaired, when an obstacle is detected by mechanical sensors, e.g. an optically undetected current collector of another vehicle, or when a vehicle driver issues a relevant command.

11. Method according to one of the Claims 6 to 10,
**wherein characterized in that**
the control system - on the basis of the previous position of the overhead line (1) as an almost straight line in space and a motion vector of the vehicle that results from its previous and current differential speed and orientation in the street space and hence relative to the overhead line (1) - establishes a corresponding new possible position for the overhead line (1) as a line in the two-dimensional images of the cameras (6) with a high probability and uses this result in optical pattern recognition.

12. Method according to one of the Claims 6 to 11,
**wherein characterized in that**
the control system computes by way of the integrated digital map on which the route to be traveled by the vehicle is entered - in combination with position determination and statistical methods in the form of continuously acquired empirical values for the purpose of energy optimization - in which areas secondary energy from an energy storage device will be needed, whereby an elevation profile of the terrain can also be referenced for determining the sections with an uphill or downhill gradient, in order to disconnect also for the purpose of minimizing wear in the latter case.

13. Method according to one of the Claims 6 to 12,
**wherein characterized in that**
the control system determines an energy flow in the vehicle employing an expected consumption profile such that also when the vehicle is in a connected state a portion of the operating energy is drawn from the energy storage device or recuperative energy is fed into a line network from traction motors or even from the energy storage device or such that, conversely, simultaneous charging of the energy storage device takes place via the overhead line (1).

14. Device according Claim 1 for executing a method according to one of the Claims 6 to 13.

## Revendications

1. Dispositif de connexion et de déconnexion automatique d'au moins un trolley (3) de véhicule dont le moteur est alimenté par au moins une ligne aérienne de contact (1), comprenant :
- au moins un actionneur (9) conçu pour déplacer le trolley (3),
- au moins une unité d'acquisition et d'analyse d'images (6) conçue pour commander l'actionneur (9) de telle façon que le trolley (3) soit connecté à la ligne aérienne de contact (1) ou en soit déconnecté, et
- les caméras stéréoscopiques de l'unité d'acquisition et d'analyse d'images (6) conçues pour capturer une image stéréoscopique du trolley (3) et de la ligne aérienne de contact (1) ;
**qui se caractérise en ce que**
l'unité d'acquisition et d'analyse d'images (6) est conçue pour contrôler au moins un actionneur (9) grâce à la reconnaissance de formes.

2. Dispositif conforme à la revendication 1,
**qui se caractérise par :**
un circuit électronique équipé d'éléments de communication et de stockage conçus pour positionner un sabot de contact (2) du trolley (3) par le biais de commandes de contrôle données à l'actionneur (9) sur la base d'un signal émis par les caméras stéréoscopiques (6) et d'autres données variables, de telle manière qu'un contact électrique puisse être établi entre le sabot de contact (2) et la ligne aérienne de contact (1).

3. Dispositif conforme à l'une des revendications précédentes,
**qui se caractérise par :**
- deux trolleys (3), chacun équipé d'un sabot de contact (2),
- deux lignes aériennes de contact (1) et
- au moins deux actionneurs (9) qui déplacent chacun un trolley (3).

4. Procédé de connexion et de déconnexion automatique d'au moins un trolley (3) de véhicule qui alimenté par au moins une ligne aérienne de contact (1), grâce à :
- une acquisition d'images du trolley (3) et de la ligne aérienne de contact (1),
- une analyse d'images afin de déterminer la position du trolley (3) et de la ligne aérienne de contact (1), et
- une commande donnée à un actionneur (9) se trouvant en liaison active avec le trolley (3) sur la base de l'analyse d'images de telle manière que le trolley (3) soit connecté à la ligne aérienne de contact (1) ou en soit déconnecté ;
**qui se caractérise en ce que**
l'analyse d'images s'effectue grâce à une reconnaissance de formes.

5. Procédé conforme à la revendication 4,
**qui se caractérise en ce que**
l'acquisition et l'analyse d'images s'effectuent par stéréoscopie.

6. Procédé conforme à la revendication 5,
**qui se caractérise en ce que**
le système de contrôle émet des commandes destinées à l'actionneur (9) sur la base d'une position calculée de la ligne aérienne de contact (1) et d'un sabot de contact (2) du trolley (3), tandis que, par le biais d'images bidimensionnelles capturées par les caméras (6), la ligne aérienne de contact (1) est identifiée comme une ligne en grande partie droite, ce qui permet de calculer dans chaque cas deux surfaces presque planes dans un espace tridimensionnel par rapport au véhicule ; la projection de ces surfaces doit engendrer les lignes en grande partie droites dans l'image bidimensionnelle, que la ligne aérienne de contact (1) devra suivre pour cette raison, en conséquence de quoi les deux surfaces se recoupent, et une ligne en grande partie droite par rapport au véhicule est ainsi obtenue dans l'espace en tant qu'intersection ; de manière analogue, la position d'un sabot de contact (2) correspondant du trolley (3) est de nouveau calculée par stéréoscopie dans l'espace en tant que point d'intersection approximatif des lignes dans l'espace, lesquelles sont définies par la projection d'un point déterminé de façon appropriée du sabot de contact (2) dans les deux images bidimensionnelles.

7. Procédé conforme à la revendication 6,
**qui se caractérise en ce que**
la commande pour connecter et déconnecter le trolley (3), c'est-à-dire à le mettre en contact avec la ligne aérienne de contact (1), et à le désengager et/ou l'enclencher dans le dispositif de verrouillage de la perche (8), est émise par un niveau supérieur du système de contrôle, lequel se base sur une carte numérique intégrée qui indique, sur un plan des itinéraires, les zones dans lesquelles le véhicule est censé fonctionner en étant connecté à la ligne aérienne de contact (1) ; lorsque le véhicule quitte ces zones, une commande de déconnexion automatique est émise ; inversement, lorsque le véhicule entre dans une zone équipée de la ligne aérienne de contact (1), une connexion automatique peut être requise, ce pour quoi la position respective du véhicule est calculée sur la carte numérique par le biais d'un système mondial de navigation par satellite.

8. Procédé conforme à la revendication 6 ou 7,
**qui se caractérise en ce que**
lorsque des lignes aériennes de contact (1) bifurquent, les aiguillages traditionnels sont supprimés et la ligne aérienne de contact (1) s'interrompt pour reprendre après la bifurcation ; le système de contrôle fait en sorte qu'un véhicule qui tourne se déconnectera brièvement dans la zone d'aiguillage et se reconnectera ensuite à la nouvelle ligne aérienne de contact (1) ; le système agit de manière analogue dans les cas où le véhicule traverse une intersection et que la ligne aérienne de contact (1) à laquelle il est connecté s'interrompt.

9. Procédé conforme à l'une des revendications 6 à 8,
**qui se caractérise en ce que**
la brève déconnexion est également initiée par le contrôle de système lorsque le véhicule croise un autre véhicule doté d'un équipement similaire ou passe près d'un véhicule qui utilise la même ligne aérienne de contact (1), auquel cas les deux véhicules se mettent en communication par liaison radioélectrique numérique (8) et déterminent d'un commun accord lequel des deux véhicules doit se déconnecter.

10. Procédé conforme à l'une des revendications 6 à 9,
**qui se caractérise en ce que**
de manière générale, le système de contrôle déclenche également une déconnexion lorsque la reconnaissance optique de formes signale une interruption imprévue ou un obstacle, notamment le trolley (3) d'un autre véhicule en cas de mauvaise liaison radioélectrique numérique, lorsqu'un obstacle tel que le trolley (3) non identifié visuellement d'un autre véhicule est décelé par des détecteurs mécaniques ou lorsqu'un conducteur de véhicule en donne la commande correspondante.

11. Procédé conforme à l'une des revendications 6 à 10,
**qui se caractérise en ce que**
le système de contrôle, sur la base de la position précédente de la ligne aérienne de contact (1) en tant que ligne presque droite dans l'espace et d'un vecteur de mouvement du véhicule, obtenu à partir de sa vitesse et de son orientation différentielles précédentes et actuelles dans l'espace de la rue, et par conséquent relatif à la ligne aérienne de contact (1), établit avec une plus grande probabilité une nouvelle position possible adéquate de la ligne aérienne de contact (1) en tant que ligne dans les images bidimensionnelles des caméras (6) ; ce résultat sera utilisé pour la reconnaissance optique de formes.

12. Procédé conforme à l'une des revendications 6 à 11,
**qui se caractérise en ce que**
le contrôle de système calcule par le biais de la carte numérique intégrée, sur laquelle est également indiqué l'itinéraire que doit suivre le véhicule, en combinaison avec la détermination de position et des méthodes statistiques sous la forme de valeurs empiriques acquises en continu à des fins d'optimisation de l'énergie, les zones dans lesquelles sera requise de l'énergie secondaire provenant d'un accumulateur d'énergie, ce pour quoi un profil des élévations du terrain pourra également être utilisé pour déterminer les segments de montée et de descente afin de déconnecter le trolley (3) pour minimiser notamment le risque d'usure dans les descentes.

13. Procédé conforme à l'une des revendications 6 à 12,
**qui se caractérise en ce que**
le système de contrôle détermine un flux d'énergie dans le véhicule en utilisant un profil de consommation escompté, de telle manière que, même lorsque le véhicule est connecté à la ligne aérienne de contact (1), une partie de l'énergie de fonctionnement est tirée de l'accumulateur d'énergie, ou encore, que de l'énergie récupérée à partir des moteurs de traction ou même de l'accumulateur d'énergie est réintroduite dans un réseau de lignes, et qu'inversement, l'accumulateur d'énergie se recharge simultanément par le biais de la ligne aérienne de contact (1).

14. Dispositif conforme à la revendication 1 pour la réalisation d'un procédé conforme à l'une des revendications 6 à 13.
